# EUROPÄISCHE PATENTANMELDUNG

(11) **EP 3 786 818 A1**
(43) Veröffentlichungstag der Anmeldung: **03.03.2021**
(21) Anmeldenummer: 19193793.7
(22) Anmeldetag: 27.08.2019
(51) Int. Cl.: G06F 21/10, G06F 21/14, G06F 21/57

(54) **VERFAHREN ZUM SCHÜTZEN EINER SOFTWAREANWENDUNG GEGEN EIN UNBEFUGTES NUTZEN**

(71) Anmelder: Siemens Aktiengesellschaft, 80333 München (DE)
(72) Erfinder: Feist, Christian Peter, 80689 München (DE); Zwanzger, Johannes, 85579 Neubiberg (DE)

(57) **Zusammenfassung**

Die Erfindung beansprucht ein Verfahren zum Schützen einer Softwareanwendung gegen ein unbefugtes Nutzen, wobei die Softwareanwendung einen ausführbaren Softwarecode umfasst, welcher eine erste vorgegebene Codestelle (C₀) oder mehrere erste vorgegebene Codestellen und eine von der ersten unterschiedliche zweite vorgegebene Codestelle (C₁) oder mehrere von den ersten unterschiedliche zweite vorgegebenen Codestellen (C₁, C₂, ...) aufweist, aufweisend folgende Schritte:
a) Bereitstellen zumindest einer ermittelten Laufzeiteigenschaft einer Laufzeitumgebung (L), in der der Softwarecode ausgeführt werden soll und/oder ausgeführt wird,
b) Auswählen (2) der ersten oder einer der ersten Codestellen, wenn der Wert der zumindest einen ermittelten Laufzeiteigenschaft einem Vergleichswert entspricht oder diesem innerhalb eines vorgebbaren Maßes ähnlich ist,
c) Auswählen (2) der zweiten oder einer der zweiten Codestellen, wenn der Wert der zumindest einen ermittelten Laufzeiteigenschaft von einem Vergleichswert innerhalb eines vorgebbaren Maßes abweicht,
d) Fortsetzen (3) einer Ausführung des Softwarecodes an der ausgewählten Codestelle.

## Beschreibung

Die Erfindung betrifft ein Verfahren und eine Vorrichtung zum Schützen einer Softwareanwendung gegen ein unbefugtes Nutzen, wobei die Softwareanwendung einen ausführbaren Softwarecode umfasst.

Bei der Entwicklung von Softwarekomponenten sollen Softwareanwendungen gegen ein unbefugtes Nutzen, vorzugsweise gegen Reverse Engineering oder Codelifting geschützt werden. Beim Reverse-Engineering versucht ein Angreifer, auf Basis des Softwarecodes und des Laufzeitverhaltens der Softwareanwendung deren innere Zusammenhänge zu verstehen. Das in der Software enthaltene Know-how kann damit extrahiert oder gezielte Manipulationen eingebacht werden, um ein bestimmtes Verhalten zu erreichen (z.B. zum Umgehen einer Lizenzprüfung). Beim Codelifting benötigt der Angreifer dagegen kein genaues Verständnis der Softwareanwendung und versucht stattdessen, eine Kopie des Softwarecodes (bzw. eine 1:1-Übersetzung für die Zielhardware) für eigene Zwecke z.B. zum illegalen Nachbau von Produkten zu nutzen.

Es sind Obfuskationsmethoden bekannt, um Softwarecode schwer verständlich zu machen und so ein Reverse Engineering oder eine für den Angreifer nützliche Veränderung des Softwarecodes zu verhindern. Eine Übersicht befindet sich beispielweise auf https://de.wikipedia.org/wiki/Obfuskation.

Es ist möglich, den Softwarecode von Funktionen zu verschlüsseln und nur bei Ausführung der Funktion zur Laufzeit temporär zu entschlüsseln, um ein Reverse Engineering durch Disassemblieren der Software zu erschweren.

Es ist daher eine Aufgabe der vorliegenden Erfindung, ein Verfahren bzw. eine Vorrichtung zum Schützen einer Softwareanwendung gegen ein unbefugtes Nutzen zu schaffen, welches gegenüber dem eingangs Genannten einen verbesserten Schutz gegen Angreifer aufweist.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zum Schützen einer Softwareanwendung gegen ein unbefugtes Nutzen, wobei die Softwareanwendung einen ausführbaren Softwarecode umfasst, welcher eine erste vorgegebene Codestelle oder mehrere erste vorgegebene vorzugsweise unterschiedliche Codestellen und eine von der ersten unterschiedliche zweite vorgegebene Codestelle oder mehrere von den ersten unterschiedliche zweite vorgegebenen Codestellen bereitstellt bzw. aufweist, aufweisend folgende Schritte:
a) Bereitstellen zumindest einer ermittelten Laufzeiteigenschaft einer Laufzeitumgebung, in der der Softwarecode ausgeführt werden soll und/oder ausgeführt wird,
b) Auswählen der ersten oder einer der ersten Codestellen, wenn der Wert der zumindest einen ermittelten Laufzeiteigenschaft einem Vergleichswert entspricht oder diesem innerhalb eines vorgebbaren Maßes ähnlich ist,
c) Auswählen der zweiten oder einer der zweiten Codestellen, wenn der Wert der zumindest einen ermittelten Laufzeiteigenschaft von einem Vergleichswert innerhalb eines vorgebbaren Maßes abweicht,
d) Fortsetzen bzw. Weiterführen einer Ausführung des Softwarecodes an der ausgewählten Codestelle.

Eine Codestelle kann dabei Instruktionen bzw. Befehle, eine Programmverzweigstelle, eine Referenz auf eine Datenstruktur oder auf eine Funktion bzw. einen Funktionsaufruf darstellen.

Ein Angriff (Änderungen, die zur Laufzeit auftreten, z.B. dem Starten eines schadhaften Prozesses nach Ausnutzen einer Softwareschwachstelle) kann zu einer Veränderung der Laufzeiteigenschaften der Laufzeitumgebung führen. Wird die Ausführung des zu schützenden Softwarecode an einer bestimmten Codestelle von zumindest einer solchen Laufzeiteigenschaft abhängig gemacht, dann führen solche Angriffe automatisch dazu, dass die Softwareanwendung zur Laufzeit nicht an der gewünschten bzw. korrekten ersten Codestellen oder mehreren ersten Codestellen, sondern an einer oder mehreren zweiten Codestellen fortgeführt wird. Somit können kritische Daten (z.B. verschlüsselte Dateien), die nur durch Fortsetzung an der ersten Codestelle erreichbar sind, vor einem Angreifer besser geschützt werden.

Zum Fortsetzen an der ausgewählten Codestelle kann eine Instruktion bzw. Befehl oder eine Funktion (beispielsweise eine Schlüsselableitungsfunktion nach einer in EP19167509 schon vorgeschlagenen Methode) aus mit mindestens einem von der jeweiligen Codestelle abhängigen Eingabeparameter angewandt oder eine oder mehrere von der jeweiligen Codestelle abhängige Datenstrukturen (z.B. Konstante, Variablen, Strings, Dateipfade etc.) referenziert werden.

Es kann zumindest eine vorgebbare Regel bestimmt sein, welche für die Ermittlung zumindest einer Laufzeiteigenschaft (statisch, dynamisch, welche LZKomponente...) verwendet wird.

Der Vergleichswert kann aus ein oder mehreren initialen Werten der Laufzeiteigenschaft(en) (entweder vorgegeben/ermittelt oder gemessen) abgeleitet werden. Der Vergleichswert kann dabei kryptographisch geschützt sein.

Der Wert oder die Werte der einen oder der mehreren Laufzeiteigenschaften können einen digitalen Fingerabdruck bilden.

Zweckmäßigerweise wird eine Auswahlfunktion abhängig vom Vergleichswert wenigstens eine der genannten Codestellen zur Fortsetzung der Ausführung des Softwarecodes auswählt. Die Auswahlfunktion kann obfusziert werden.

Unterschiedliche Werte des digitalen Fingerabdrucks können auf Indizes abgebildet werden, die jeweils den ersten und/oder zweiten Codestellen zugeordnet bzw. zugewiesen werden/sind (ggf. Zeiger auf die Adresse der auszuführenden Codestelle bzw. Funktion). Wenn der Wert des digitalen Fingerabdrucks dem Vergleichswert entspricht, wird mit der entsprechenden indizierten Codestelle fortgefahren. Im Idealfall ist es die erste Codestelle.

Die obigen Schritte a) bis d) können wiederholt werden. Zur Bestimmung eines Vergleichswertes (ggf. initialer Vergleichswert) können die obigen Schritte a), b), c) und d) ausgeführt werden, bevor die Schritte a) bis d) gegebenenfalls wiederholt werden.

Das Bereitstellen der zumindest einen ermittelten Laufzeiteigenschaft kann durch Messen (mehrere Messungen ggf. zeitlich versetzt) der entsprechenden einen oder mehreren Laufzeiteigenschaften während der Ausführung des Softwarecodes erfolgen.

Der Vergleichswert kann durch Messen der entsprechenden einen oder mehreren Laufzeiteigenschaften während wenigstens einer initialen Ausführung des Softwarecodes mit der Fortsetzung an zumindest einer ersten Codestelle bestimmt werden.

Um einen Vergleichswert, der ein Sollwert sein kann, zu ermitteln und die Auswahlfunktion darauf konfigurieren zu können, gibt es verschiedene Möglichkeiten:
1) Die Softwareanwendung wird bereits in der finalen Fassung in der regulären oder in einer emulierten Laufzeitumgebung ausgeführt.
   a. Es ist möglich, den ermittelten Vergleichswert zu exportieren. Dieser Mechanismus sollte nicht durch einen Angreifer nutzbar sein. Dies kann z.B. durch einen versteckten Initialmechanismus für diesen Export und/oder durch ein asymmetrisches Verschlüsseln vom Vergleichswert mit einem öffentlichen Schlüssel (K_{pub)} realisiert werden, dessen privates Gegenstück (Kₚᵣᵢᵥ₎ nur den Entwicklern der Softwareanwendung zugänglich ist. Alternativ ist auch die Verwendung einer symmetrischen Verschlüsselung möglich. Allerdings sollte die verwendete Verschlüsselung geschützt werden, z.B. durch Obfuskation der Verschlüsselungsroutine inklusive Schlüssel.
   b. Eine Konfigurationsmöglichkeit (z.B. mit Hilfe einer Konfigurationsdatei), durch die die Auswahlfunktion so angepasst werden kann, dass bei Vorliegen des Vergleichswerts die erste Codestelle ausgewählt wird.
   Es ist zu beachten, dass weder die Aktivierung des Exportmechanismus noch die Anpassung der Konfiguration von der Auswahlfunktion Einfluss auf die Messung haben dürfen.
2) Die Softwareanwendung kann vorab in einer modifizierten Fassung ausgeführt werden, in der sie einen initialen Vergleichswert exportiert und mit einer noch unangepassten oder ggf. auch gezielt modifizierten Variante der Auswahlfunktion arbeitet, die z.B. hart kodiert die "richtige" erste Codestelle auswählt (Letzteres ist insbesondere dann vorteilhaft, wenn in einer Variante der Erfindung mehrere Codestellen in die Softwareanwendung eingebracht werden sollen und die Auswahl der ersten Codestelle Einfluss auf die durchgeführten Messungen hat. Denn dann können mit einem einzigen Lauf von der Softwareanwendung in modifizierter Fassung sämtliche Sollwerte ermittelt werden). Anschließend wird die modifizierte Variante der Auswahlfunktion auf Basis des ermittelten Vergleichswerts so modifiziert, dass bei Vorliegen des Vergleichswerts die richtige erste Codestelle ausgewählt wird. In dieser Ausführungsform ist zu beachten, dass die Unterschiede zwischen der Softwareanwendung in der modifizierten Fassung und der Softwareanwendung keinen Einfluss auf die Messungen haben dürfen (relevant, falls Teile des Softwarecodes der Softwareanwendungen in die Bestimmung des Fingerabdrucks eingehen).

Die vorliegende Erfindung betrifft ferner eine Vorrichtung, ein Gerät sowie ein Computerprogrammprodukt.

Die beanspruchte Vorrichtung (z.B. IOT-Gerät, Feldgerät etc.) zum Schützen einer Softwareanwendung gegen ein unbefugtes Nutzen, wobei die Softwareanwendung einen ausführbaren Softwarecode umfasst, welcher eine erste vorgegebene Codestelle (C0) oder mehrere erste vorgegebene Codestellen und eine von der ersten unterschiedliche zweite vorgegebene Codestelle oder mehrere von den ersten unterschiedliche zweite vorgegebenen Codestellen (C1, C2, ...) aufweist, weist folgende Einheiten auf:
a) eine Bereitstellungseinheit, die dazu ausgelegt ist, zumindest eine ermittelte Laufzeiteigenschaft einer Laufzeitumgebung, in der der Softwarecode ausgeführt werden soll und/oder ausgeführt wird, bereitzustellen,
b) eine Auswahleinheit, die dazu ausgelegt ist, eine ersten oder eine der ersten Codestellen auszuwählen, wenn das Messergebnis der zumindest einen ermittelten Laufzeiteigenschaft einem Vergleichswert entspricht oder diesem innerhalb eines vorgebbaren Maßes ähnlich ist,
c) eine Auswahleinheit, die dazu ausgelegt ist, eine zweite oder eine der zweiten Codestellen auszuwählen, wenn das Messergebnis der zumindest einen ermittelten Laufzeiteigenschaft von einem Vergleichswert innerhalb eines vorgebbaren Maßes abweicht,
d) eine Ausführungseinheit, die dazu ausgelegt ist, eine Ausführung des Softwarecodes an der ausgewählten Codestelle fortzusetzen.

Das Computerprogrammprodukt umfassend computerausführbare Anweisungen, welche, wenn in die Vorrichtung (z.B. Computer) geladen, zur Durchführung eines Verfahrens nach der oben genannten Art und Ausführungsformen ausgelegt sind.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einem Gerät/Modul bzw. Vorrichtung der vorstehend genannten Art ablaufen oder als Computerprogrammprodukt auf einem computerlesbaren Medium gespeichert sein.

Die Vorrichtungen, Einrichtungen bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

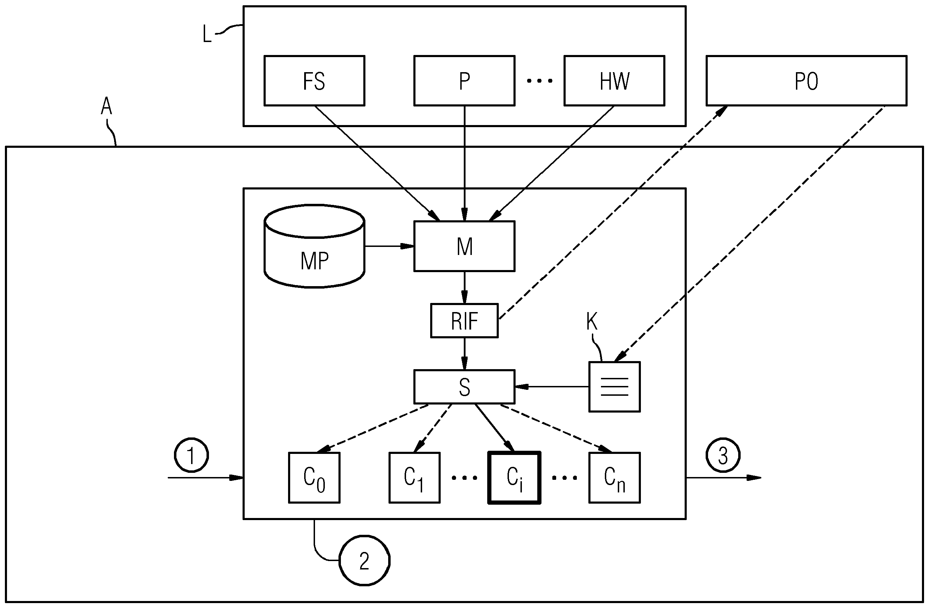

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die einzige Figur zeigt in schematischer Darstellung eine Codestellenauswahl während der Ausführung einer Softwareanwendung.

In der zu schützenden Software, beispielsweise einer Softwareapplikation bzw. -anwendung A, kann es eine oder mehrere gleiche oder unterschiedliche Codestellen C₀ geben, für die sich eine oder mehrere Varianten C₁, C₂, ..., Cₙ mit der Eigenschaft erstellen lassen, dass die Ausführung von C_{i>0} anstelle von C₀ dazu führt, dass die Softwareapplikation A zwar falsch, aber ohne Absturz ausgeführt wird. Für einen Angreifer ist schwer feststellbar, dass das falsche Verhalten durch die Ausführung von C_{i>0} hervorgerufen wurde. Eine Variation von C₀ muss nicht notwendigerweise die im Softwarecode vorgesehenen Instruktionen betreffen, sondern kann schon durch eine Veränderung der referenzierten Daten (z.B. Konstanten, Indizes, Strings, Dateipfade, Input von Funktionen, ...) erzielt werden.

Eine oder mehrere Laufzeiteigenschaften einer regulären, operativen Laufzeitumgebung L kann erfasst werden. Diese können als Kriterium für die Auswahl zwischen der Ausführung von einer ersten Codestelle C₀ und einer der Ersatzvarianten C_{i>0} (zweiten Codestellen) verwendet werden. Eine Softwareanwendung A kann dabei eine oder mehrere gleiche oder unterschiedliche solcher Codestellen C₀ umfassen.

Eine Bereitstellungseinheit bzw. -funktion, die eine Messfunktion M sein kann, wertet die Laufzeiteigenschaften aus und liefert einen Wert bzw. mehrere Werte zurück, der bzw. die einen digitalen Fingerabdruck, auch Runtime Integrity Fingerprint RIF genannt, bilden kann bzw. bilden können. Welche Komponenten bzw. Eigenschaften gemessen werden sollen, wird dabei durch eine vorgebbare bzw. vorgegebene Regel, auch Measurement Policy MP genannt, bestimmt. Bei den überwachten bzw. gemessenen Eigenschaften handelt es sich sowohl um statische, beispielsweise der Prüfsumme eines (read-only) Dateisystems FS, IDs/Chipbezeichnungen/Leistungsmerkmale von Hardwarekomponenten HW etc., als auch um dynamische Eigenschaften, z.B. laufende Prozesse P, Zustände von Hardware-Komponenten HW, Laufzeit des Systems seit einem Power-on Reset, etc..

Insbesondere sollten die Eigenschaften berücksichtigt werden, die den Zugang zum bzw. die Analyse des Systems im regulären Betrieb verhindern (z.B. Abschaltung von Debugging-Ports, Deaktivierung von Login-Möglichkeiten, Konfiguration von Passwort- und Schlüsseldaten, etc.). Die Messungen können zeitlich versetzt erfolgen und daher prinzipiell auch mehrere Messungen für dieselbe Komponente bzw. Eigenschaft durchgeführt werden.

Im Folgenden werden mehrere Möglichkeiten für messbare Laufzeiteigenschaften erläutert. Diese können beliebig zu einer oder mehreren vorgebbaren Regeln bzw. einer Measurement Policy MP kombiniert werden:
- Bisherige Laufzeit des Gerätes seit einem Reset, z.B. mittels eines Hardware-Zählers oder Realtime Clock. Auch die bisherige Laufzeit der Software, z.B. eines Linux Kernels (/proc/uptime) kann hier verwendet werden.
- Meta-Informationen zu laufenden Prozessen, z.B. der Benutzer, unter dem ein Prozess läuft, welcher Prozess diesen gestartet hat (Prozessbaum / Parent-Child Beziehung von Prozessen / "Prozesskette"), SELinux-Domäne eines Prozesses, Namespaces und cgroups in denen ein Prozess läuft.
- Aktuell eingehängte Dateisysteme und deren Eigenschaften (z.B. read-only). So können auch vorhandene, austauschbare Peripherie-Bausteine - wie z.B. USB-Dongles - berücksichtigt werden.
- Dedizierte Dateien, die die Integrität des aktuellen Systems widerspiegeln. Beispielsweise können sicherheitskritische Ereignisse durch ein Host-Based Intrusion Detection System (HIDS) in spezielle Dateien geschrieben werden, die in M mitgemessen werden. Eine weitere Möglichkeit ist etwa, Konfigurationsdaten, die ein Einloggen auf das System beschränken (oder sogar ganz verhindern), in die Messung mit einzubeziehen: Bei einem Angriff, bei dem die Konfiguration so verändert wird, dass ein Einloggen wieder möglich ist (insbesondere, um das System zur Laufzeit "von innen" beobachten zu können), wird dann ein falscher Fingerabdruck RIF abgeleitet.
- Der Zustand bestimmter Sicherheitsmechanismen kann mit einbezogen werden. Auf einem Linux-basierten System kann so nur der richtige Fingerabdruck RIF gemessen werden, wenn einer oder mehrere Sicherheitsmechanismen in einem bestimmten Zustand sind (z.B. SELinux im "Enforcing" Modus) .
- Es können statische Daten, wie beispielsweise eine Hardware-ID, oder Konfigurationsdateien im Dateisystem mit gemessen werden. Wird M in einer anderen Umgebung ausgeführt (andere Hardware und somit Hardware-ID, andere Konfiguration), oder werden die als statisch angenommenen Dateien manipuliert, wird somit ein anderer Fingerabdruck RIF abgeleitet.
- Es kann auf das Vorhandensein bestimmter Dateiinhalte geprüft werden, die z.B. aus einer Provisioning-Phase des Gerätes vorhanden sein sollen.
- Meta-Informationen des Dateisystems, wie z.B. die Größe bestimmter Teile, Zugriffs- oder Änderungszeiten, Permissions, Nutzer / Owner, Ziele von symbolischen Links, etc.
- Es kann mit einbezogen werden, wie die Softwareanwendung A verwendet, bzw. aufgerufen wurde. So kann z.B. die Prozesskette von der Softwareanwendung A, ausgehend von der aufrufenden Komponente, bis zur Wurzel des Prozessbaumes in M eingehen. Dabei können z.B. die Namen der in der Prozesskette enthaltenen Prozesse fortlaufend gehasht werden. So kann sichergestellt werden, dass der richtige Fingerabdruck RIF nur im Zuge eines vorgesehenen Aufrufs abgeleitet werden kann.
- Es kann ein Watchdog (Hardware oder Software-Funktion) mit einbezogen werden, der die Integrität der Ausführungsumgebung überwacht.
- Es kann die Ausführungszeit einer speziell vorgesehenen Benchmarkfunktion gemessen werden und diese - mit einem gewissen Spielraum für normale Messvarianzen - in M mit einbezogen werden. Benötigt die Ausführung einer solchen Funktion beispielsweise 250ms mit einer Standardabweichung (Sigma) von 10ms, erhält man bei Integerdivision durch 100ms auf einem nicht-manipulierten Gerät mit 5-Sigma-Sicherheit den Wert 2. Einem Angreifer dagegen wird die Reproduktion der abgeleiteten Schlüssel in einer simulierten bzw. emulierten Umgebung erschwert, weil nun zusätzlich auch die Leistung des Gerätes hinreichend genau (im Beispiel: +/- 20%) nachgebildet werden muss.

Der ermittelte Fingerabdruck RIF aus den bereitgestellten bzw. gemessen Eigenschaften kann auf einem regulären System bzw. Gerät als Vergleichswert einen reproduzierbaren Sollwert r₀ einnehmen, ändert sich aber bei Manipulationen, wie z.B. beim Starten eines zusätzlichen Prozesses oder beim Ändern von Betriebsdaten durch einen Angreifer. Nur wenn RIF=r₀ gilt oder RIF bis zu einem vorgebbaren Maß oder Grad vom Sollwert abweicht, kommt die erste Codestelle C₀ zur Ausführung, andernfalls eine der zweiten Codestellen C_{i>0}. Die Ausführung von der Codestelle C₀ erfolgt somit nur in einem als valide/gültig definierten Zustand der Laufzeitumgebung, der implizit durch die Measurement Policy MP und die Zustände der gemessenen Laufzeitkomponenten definiert ist. Dies hat den Vorteil, dass ein Angreifer, der die ausführende Softwareapplikation auf einem Gerät bzw. die darauf laufende Laufzeitumgebung modifiziert hat oder den Softwarecode auf einem anderen Gerät ausführt, nicht den korrekten Ablauf der Softwareapplikation A (insbesondere nicht die Ableitung des Sollwerts r₀ und die Ausführung von C₀) beobachten kann. Somit ist die Softwareapplikation A gegen Reverse Engineering und Codelifting geschützt.

Der Wert in Form des Fingerabdrucks RIF geht als Parameter in eine Auswahlfunktion S ein, welche eine auszuführende Variante unter den Codestellen Cᵢ auswählt. Die Auswahl der Codestelle C₀ im regulären Fall auf Basis von RIF=r₀ sollte innerhalb der Auswahlfunktion S vorzugsweise implizit erfolgen. Insbesondere darf der Sollwert r₀ für einen Angreifer nirgendwo ablesbar sein. Möglichkeiten zur Umsetzung dieser Anforderung sind zum Beispiel:
- Obfuskation von S
- Konstruktion einer Funktion
   f: Wertebereich RIF → {Indizes 0, 1, ..., n},
   so dass r₀ die einzige Nullstelle von f ist (bzw. r₀ das einzige Argument von f ist, für das f(r₀)=i₀ gilt, wobei i₀ der Index für die erste Codestelle von mehreren möglichen ersten Codestellen ist). Weder die Sonderrolle vom Sollwert r₀ im Definitionsbereich von f noch von 0 bzw. i₀ im Wertebereich darf dabei offensichtlich sein. Wenn im manipulierten Zustand mit einer gewissen Wahrscheinlichkeit die erste Codestelle C₀ bzw. Cᵢ₀ zur Ausführung kommt, können auch sehr einfache Definitionen für f möglich sein, beispielsweise f(r)=r+c mod (n+1), wobei c so gewählt wird, dass f(r₀)=i₀ gilt.

Statt wie im letzten Punkt den Index einer Codestelle zu bestimmen, kann die Auswahlfunktion S in verschiedenen Ausführungsformen der Erfindung auch andere Werte zurückgeben, z.B. direkt einen Zeiger auf die Adresse einer auszuführenden Funktion.

Parameter für die Measurement Policy MP, zur Ableitung des Fingerabdrucks RIF in einer Bereitstellungseinheit M oder für die Auswahlfunktion S in einer Auswahleinheit können dabei entweder in Hardware gespeichert werden (z.B. durch einen Hardware-basierten Trust Anchor) oder in Software (z.B. als Teil einer obfuszierten Routine). Ebenso können die Implementierungen für MP, M und S in Software- oder Hardwarekomponenten realisiert werden.

In einer präoperativen Phase PO kann eine Konfiguration K mit Hilfe des Sollwerts r0 generiert werden, welche durch die S so angepasst werden kann, dass bei Vorliegen von r₀ die Variante C₀ selektiert wird. Beispielsweise könnten Parameter der Funktion f von oben konfiguriert werden.

Die Softwareanwendung A kann vorab in einer modifizierten Fassung initial ausgeführt werden. Dabei wird der Sollwert r₀ exportiert und mit einer noch unangepassten oder ggf. auch gezielt modifizierten Variante der Selektionsfunktion gearbeitet, die die richtige Variante C₀ der Codestellen auswählt.

Wenn es mehrere erste Codestellen bzw. Abänderungen einer ersten Codestelle gibt, sind folgende Ausführungsformen möglich:
- Variation der referenzierten Eingabedaten bzw. deren Reihenfolge in einer Schlüsselableitungsfunktion: Generiert die Codestelle C₀ auf Basis bestimmter Eingabedaten einen Schlüssel für einen Kryptoalgorithmus (z.B. durch Hashen der Daten), erzeugen die zweiten Codestellen Cᵢ anstatt von C₀, bei denen andere oder umsortierte Daten gehasht werden, "falsche" Schlüssel. Mit diesen ist dann beispielsweise ein korrektes Entschlüsseln oder Signieren von Daten nicht mehr möglich. Die Messwerte bestimmen die Auswahl und Reihenfolge der Eingabedaten. Ein Angreifer, der die Ausführung der Softwareanwendung A auf einem modifizierten System (mit verändertem RIF) beobachtet, kann daraus nicht mehr die korrekten Datenbezüge bzw. deren Reihenfolge ablesen.
- Rechenschritte zur Datenaufbereitung, bei denen Eingabe- und Ausgabeformat identisch sind (z.B. Filterschritte in einer Bildverarbeitung): Durch Weglassen/Abschwächen solcher Schritte in den von C₀ verschiedenen Codestellen Cᵢ entstehen Varianten der Softwareanwendung A, die prinzipiell immer noch funktionieren, aber schwächere Ergebnisse erzielen.
- Durch eine ausgewählte Codestelle Cᵢ können gezielt nachteilige Modifikation der Eingabe für eine Funktion g in der Softwareanwendung A (z.B. mittels Addition von Rauschen auf die Inputwerte) vorgenommen werden, wobei nur C₀ die Eingabe unverändert lässt.
- Änderungen mit Einfluss auf die Leistung: Werden statt der Codestelle C₀ zumindest eine Codestelle Cᵢ ausgeführt, funktioniert die Softwareanwendung A immer noch, nur langsamer bzw. mit erhöhtem Ressourcenbedarf. Derartige Ausführungsformen lassen sich beispielsweise erreichen durch:
   ∘ Modifikation von Rechenschritten in implementierten Algorithmen
   ∘ Auswahl zwischen vordefinierten Parametersätzen, bei denen nur derjenige zur Codestelle C₀ optimiert ist
   ∘ eine "künstliche" zeitliche Verzögerung in den Codestellen Cᵢ ≠ C₀

Es können innerhalb der Softwareanwendung A ein oder mehrere Verzweigungspunkte eingebracht werden (gekennzeichnet mit Schritt 1).
Durch individuelle Kalibrierung der Auswahlfunktion S können sich die Sollzustände der Laufzeitumgebung zwischen den Verzweigungspunkten auch unterscheiden.
Bei deterministisch feststehender Ablaufreihenfolge können in die Measurement Policy MP, die Messfunktion M und die Auswahlfunktion S eines Verzweigungspunktes auch Mess- bzw. Auswahlergebnisse früherer Verzweigungspunkte eingehen. Insbesondere kann hierdurch auch der Ablauf des Messvorgangs selbst geschützt werden.

Dieselben Codestellen Cᵢ können an verschiedenen Verzweigungspunkten ausgewählt werden. Jede Codestelle Cᵢ kann die korrekte Variante für den auszuführenden Softwarecode für einen bestimmten Verzweigungspunkt repräsentieren, während die jeweils anderen Codestellen Cₖ ≠ Cᵢ für diesen Verzweigungspunkt die Rolle einer "falschen" Variante spielen (kennzeichnet durch Schritt 2). Die Ausführung des Softwarecodes kann an der ausgewählten Codestelle fortgesetzt werden (gekennzeichnet durch Schritt 3). Beispielsweise könnte durch die Codestellen Cᵢ ein gemeinsamer, fortlaufender Hash über verschiedene Datensätze gebildet werden. Nur in der richtigen Ausführungsreihenfolge ergibt sich dann der korrekte Hashwert, wobei allerdings bei anderen Ausführungsreihenfolgen kein offensichtliches Indiz für einen Angreifer existiert, dass die Reihenfolge nicht stimmte.
- Ein Spezialfall, bei dem ebenfalls der Messvorgang geschützt wird, ist das Einbauen von Verzweigungspunkten in M bzw. S selbst auf Basis von Funktionen M' und S', wobei M' und S' vor dem Verzweigungspunkt ermittelte Ergebnisse aus M bzw. S nutzen können.
- Teile der Messungen können auch schon vorab außerhalb der Softwareanwendung A stattfinden und der Softwareanwendung bereitgestellt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das Gerät D kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Schützen einer Softwareanwendung gegen ein unbefugtes Nutzen, wobei die Softwareanwendung einen ausführbaren Softwarecode umfasst, welcher eine erste vorgegebene Codestelle (C₀) oder mehrere erste vorgegebene Codestellen und eine von der ersten unterschiedliche zweite vorgegebene Codestelle (C₁) oder mehrere von den ersten unterschiedliche zweite vorgegebene Codestellen (C₁, C₂, ...) aufweist, aufweisend folgende Schritte:
a) Bereitstellen zumindest einer ermittelten Laufzeiteigenschaft einer Laufzeitumgebung (L), in der der Softwarecode ausgeführt werden soll und/oder ausgeführt wird,
b) Auswählen (2) der ersten oder einer der ersten Codestellen, wenn der Wert der zumindest einen ermittelten Laufzeiteigenschaft einem Vergleichswert (r0) entspricht oder diesem innerhalb eines vorgebbaren Maßes ähnlich ist,
c) Auswählen (2) der zweiten oder einer der zweiten Codestellen, wenn der Wert der zumindest einen ermittelten Laufzeiteigenschaft von einem Vergleichswert innerhalb eines vorgebbaren Maßes abweicht,
d) Fortsetzen (3) einer Ausführung des Softwarecodes an der ausgewählten Codestelle.

2. Verfahren nach dem vorhergehenden Anspruch, **dadurch gekennzeichnet, dass** zum Fortsetzen an der ausgewählten Codestelle eine Instruktion oder eine Funktion mit mindestens einem von der jeweiligen Codestelle abhängigen Eingabeparameter angewandt wird oder eine oder mehrere Datenstrukturen, die jeweils abhängig von der jeweiligen Codestelle sind, referenziert werden.

3. Verfahren nach einem der vorhergehenden Ansprüche, **dadurch gekennzeichnet, dass** zumindest eine vorgebbare Regel bestimmt, welche zumindest eine Laufzeiteigenschaft ermittelt werden soll.

4. Verfahren nach einem der vorhergehenden Ansprüche, **dadurch gekennzeichnet, dass** der Vergleichswert aus ein oder mehreren initialen Werten der ermittelten Laufzeiteigenschaften abgeleitet wird.

5. Verfahren nach einem der vorhergehenden Ansprüche, **dadurch gekennzeichnet, dass** der Wert oder die Werte der einen oder der mehreren Laufzeiteigenschaften einen digitalen Fingerabdruck bilden.

6. Verfahren nach einem der vorhergehenden Ansprüche, **dadurch gekennzeichnet, dass** eine Auswahlfunktion abhängig vom Vergleichswert wenigstens eine der genannten Codestellen zur Fortsetzung des Softwarecodes auswählt.

7. Verfahren nach einem der vorhergehenden Ansprüche, **dadurch gekennzeichnet, dass** der Vergleichswert kryptographisch geschützt wird.

8. Verfahren nach einem der vorhergehenden Ansprüche, **dadurch gekennzeichnet, dass** die Auswahlfunktion obfusziert wird.

9. Verfahren nach einem der vorhergehenden Ansprüche, **dadurch gekennzeichnet, dass** unterschiedliche Werte des digitalen Fingerabdrucks auf Indizes abgebildet werden, die jeweils den ersten und/oder zweiten Codestellen zugeordnet werden.

10. Verfahren nach einem der vorhergehenden Ansprüche, **dadurch gekennzeichnet, dass** die Schritte a) bis d) aus Anspruch 1 wiederholt werden oder wiederholbar sind.

11. Verfahren nach einem der vorhergehenden Ansprüche, **dadurch gekennzeichnet, dass** zur Bestimmung eines Vergleichswertes die Schritte a), b), c) und d) ausgeführt werden, bevor die Schritte a) bis d) aus Anspruch 1 gegebenenfalls wiederholt werden.

12. Verfahren nach einem der vorhergehenden Ansprüche, **dadurch gekennzeichnet, dass** das Bereitstellen der zumindest einen ermittelten Laufzeiteigenschaft durch Messen der entsprechenden einen oder mehreren Laufzeiteigenschaften während der Ausführung des Softwarecodes erfolgt.

13. Verfahren nach einem der vorhergehenden Ansprüche, **dadurch gekennzeichnet, dass** der Vergleichswert durch Messen der entsprechenden einen oder mehreren Laufzeiteigenschaften während wenigstens einer initialen Ausführung des Softwarecodes mit der Fortsetzung an zumindest einer ersten Codestelle bestimmt wird.

14. Vorrichtung zum Schützen einer Softwareanwendung gegen ein unbefugtes Nutzen, wobei die Softwareanwendung (A) einen ausführbaren Softwarecode umfasst, welcher eine erste vorgegebene Codestelle (C₀) oder mehrere erste vorgegebene Codestellen und eine von der ersten unterschiedliche zweite vorgegebene Codestelle (C₁) oder mehrere von den ersten unterschiedliche zweite vorgegebenen Codestellen (C₁, C₂, ...) aufweist, aufweisend:
a) eine Bereitstellungseinheit, die dazu ausgelegt ist, zumindest eine ermittelte Laufzeiteigenschaft einer Laufzeitumgebung (L), in der der Softwarecode ausgeführt werden soll und/oder ausgeführt wird, bereitzustellen,
b) eine Auswahleinheit, die dazu ausgelegt ist, eine erste oder eine der ersten Codestellen auszuwählen, wenn das Messergebnis der zumindest einen ermittelten Laufzeiteigenschaft einem Vergleichswert entspricht oder diesem innerhalb eines vorgebbaren Maßes ähnlich ist,
c) eine Auswahleinheit, die dazu ausgelegt ist, eine zweite oder eine der zweiten Codestellen auszuwählen, wenn das Messergebnis der zumindest einen ermittelten Laufzeiteigenschaft von einem Vergleichswert innerhalb eines vorgebbaren Maßes abweicht,
d) eine Ausführungseinheit, die dazu ausgelegt ist, eine Ausführung des Softwarecodes an der ausgewählten Codestelle fortzusetzen.

15. Computerprogrammprodukt umfassend computerausführbare Anweisungen, welche, wenn geladen in einer Vorrichtung, zur Durchführung eines Verfahrens nach einem der vorhergehenden Verfahrensansprüche ausgelegt sind.
